# EUROPÄISCHE PATENTANMELDUNG

(11) **EP 1 245 466 A1**
(43) Veröffentlichungstag der Anmeldung: **02.10.2002**
(21) Anmeldenummer: 01107511.6
(22) Anmeldetag: 26.03.2001
(51) Int. Cl.: B60S 1/04, B60S 1/58

(54) **Schutzklappe für Scheibenwischer**

(71) Anmelder: Büse, Joachim, 33034 Brakel-Beller (DE); George, Thomas, Dr., 34125 Kassel (DE)
(72) Erfinder: Büse, Joachim, 33034 Brakel-Beller (DE); George, Thomas, Dr., 34125 Kassel (DE)
(74) Vertreter: Freiherr von Gravenreuth, Günter, Dipl.-Ing. (FH)

(57) **Zusammenfassung**

Die Erfindung betrifft eine Schutzklappe (5) für einen an einem Wischerarm (2) befestigten Scheibenwischer (1), wobei der Wischerarm (2) und der Scheibenwischer (1) in ihrer Ruheposition durch eine Abdeckklappe (5) abgekapselt sind.

## Beschreibung

Die Erfindung betrifft eine Schutzklappe für einen mechanischen Scheibenwischer.

Mechanische Scheibenwischer sind insbesondere für Land-, Luft- und Wasserfahrzeuge bekannt. Die meisten bestehenden Systeme gehen davon aus, daß der (oder die) Wischerarm(e) sektorförmig über die Scheibe bewegt werden.

(Fenster-)Scheiben von Gebäuden werden üblicherweise manuell gereinigt. Hierzu ist es bekannt, bei höheren Gebäuden spezielle Fassadenhilfen vorzusehen, so daß der Fensterputzer in einem Arbeitskorb von Fenster zu Fenster fährt. Bei insbesondere groben Glaskuppeln an Gebäuden sind Konstruktionen bekannt, bei denen bogenförmig ausgestaltete Treppen oder Leitern vom unteren Rand der Kuppel zum höchsten Punkt der Kuppel führen. Diese bogenförmigen Treppen oder Leitern sind am höchsten Punkt der Kuppel sowie am Kuppelrand so gelagert, daß sie um die gesamte Kuppel herum gefahren werden können. Von diesen bogenförmigen Treppen oder Leitern aus erfolgt dann die manuelle Reinigung der Glaskuppel.

Der von den selben Anmeldern stammenden, noch nicht veröffentlichten EP 01105666.0 ist ein Wischerarm bekannt, welcher zusammen mit dem eigentlichen Scheibenwischer nicht schwenkförmig bewegt, sondern parallel oder im wesentlichen parallel zu einer Scheibenkante über die Scheibe geführt wird.

Sowohl bei schwenkförmigen Bewegungen des Scheibenwischers, als auch bei parallel bewegten Scheibenwischern stellt sich das Problem, daß der Scheibenwischer in seiner Ruheposition Umwelteinflüssen wie (Fahrt-)Wind, Regen, Schnee und dergleichen ausgesetzt ist.

Der Erfindung liegt die Aufgabe zugrunde, einen mechanischen Scheibenwischer diesen Einflüssen zu entziehen. Diese Aufgabe wird erfindungsgemäß durch den kennzeichnenden Teil des Anspruches 1) gelöst.

Die Erfindung ist universell anwendbar, als es für die erfindungsgemäße Lösung nicht darauf ankommt, ob der Wischerarm geschwenkt oder (zusammen mit dem Scheibenwischer) senkrecht, waagerecht oder in einer anderen Position zu der Scheibe bewegt wird.

In erfindungsgemäßer Weise wird der Wischerarm in seiner Ruheposition durch eine Klappe abgedeckt.

Weitere Vorteile und Merkmale der vorliegenden Erfindung ergeben sich aus dem Ausführungsbeispiel in Verbindung mit einer Zeichnung. Hierbei zeigt
**Figur 1** zeigt eine perspektivische Darstellung einer Scheibe mit einem Scheibenwischer,
**Figur 2** zeigt einen Querschnitt durch eine Schutzklappe für Scheibenwischer,
**Figur 3** zeigt einen Querschnitt durch eine Schutzklappe für Scheibenwischer in einer anderen Ausführungsform

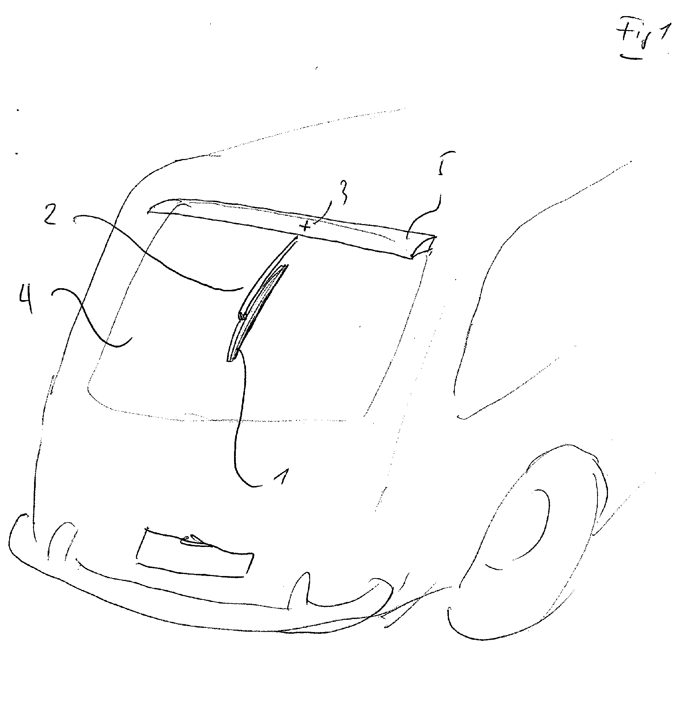

Figur 1 zeigt eine perspektivische Darstellung einer Scheibe mit einem Scheibenwischer (1), welcher an einem Wischerarm (2) angebracht ist. In diesem Ausführungsbeispiel wird die Erfindung anhand eines Heckscheibenwischers erläutert. Der Scheibenwischer (1) liegt auf einer Scheibe (4) auf. Der Wischerarm (2) schwenkt um einen schematisch dargestellten Drehpunkt (3). In seiner Ruheposition befindet sich der Wischerarm (2) parallel zur Oberkante der Scheibe (4) (nicht dargestellt). Parallel zur Oberkante der Scheibe (4) befindet sich ferner eine Abdeckklappe (5), welche erfindungsgemäß geeignet und bestimmt ist, den Wischerarm (2) nebst Scheibenwischer (1) in der Ruheposition aufzunehmen. Zu diesem Zweck wird die Abdeckklappe (5) nach unten auf die Scheibe (4) geklappt.

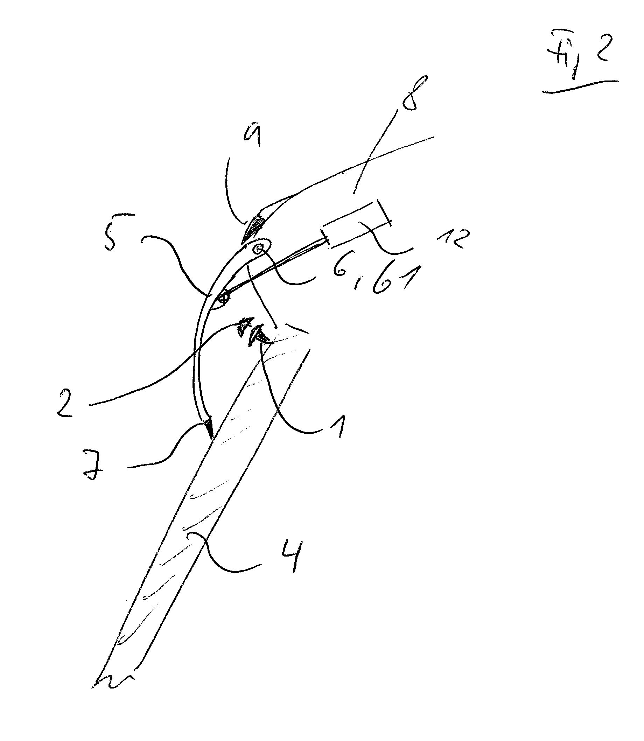

**Figur 2** zeigt einen Querschnitt durch den oberen Bereich einer Scheibe (4). In diesem Fall sind der Scheibenwischer (1) und der Wischerarm (2) in ihrer Endposition (in etwa) parallel zur oberen Kante der Scheibe (4) angeordnet. Die Abdeckklappe (5) ist hierbei geschlossen. Die Abdeckklappe (5) ist hierbei um eine Achse (6) schwenkbar. Der Schwenkmechanismus (nicht näher dargestellt) kann hierbei hydraulisch, elektromagnetisch oder mechanisch ausgestaltet sein. Die Schwenkbewegung um die Achse (6) wird dann ausgelöst, wenn sich der Wischerarm (2) in Ruheposition befindet und der Wischermotor (nicht dargestellt) abgeschaltet ist.

Die Abdeckklappe (5) besitzt eine Dichtlippe (7), welche im geschlossenen Zustand auf der Scheibe (4) aufliegt. Ausgehend von einem schematisch dargestellten Karosseriebereich (8) ist im Anschlußbereich zur Abdeckklappe (5) eine Dichtung (9) angeordnet. Die Dichtung (9) verläuft über die gesamte Länge der Abdeckklappe (5) (in Figur 2 nicht dargestellt). Auf der der Scheibe (4) zugeordneten Innenseite der Abdeckklappe (5) ist ein Schub- und Ziehelement (12) angeordnet. Das Schub- und Ziehelement (12) bewirkt, dass die Abdeckklappe (5) sich um die Achse (6) dreht. In dieser Ausführungsform ist das Schub- und Ziehelement (12) ein Spindelmotor nebst Spindelantrieb. Es liegt auf der Hand, dass das Schub- und Ziehelement (12) in erfindungsgemäßer Weise auch ein Hydraulikelement oder ein Elektromagnet sein kann.

In erfindungsgemäßer Weise kann anstelle der Achse (6) eine Welle (61) angeordnet sein. Bei dieser konstruktiven Lösung kann auf das vorbeschriebene Schub- und Ziehelement (12) verzichtet werden, wenn die Abdeckklappe (5) über eine angetriebene Welle (61) geschwenkt werden kann.

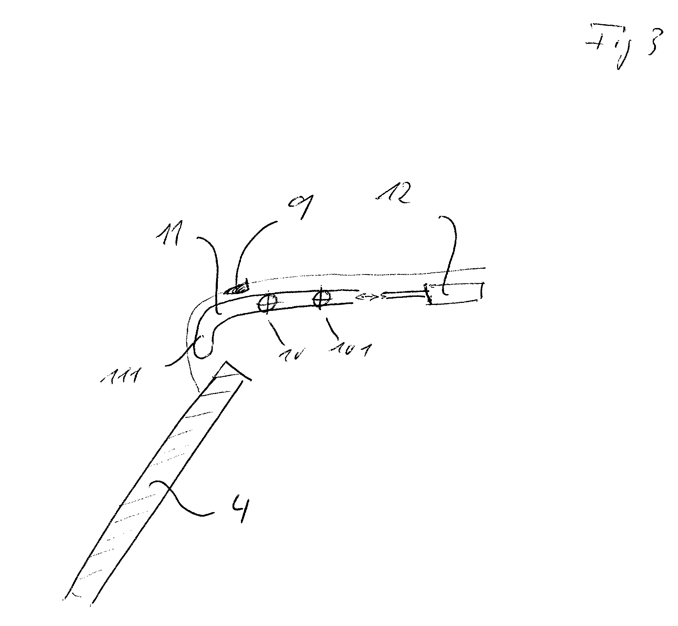

**Figur 3** zeigt einen Querschnitt durch den oberen Bereich einer Scheibe (4). Die Abdeckklappe (in diesem Ausführungsbeispiel nicht dargestellt) wird über zwei (Roll- oder Gleit-)Lager (10), (101) in einer Führungsrinne (11) geführt. Zur Bewegung der nicht dargestellten Abdeckklappe ist ein Schub- und Ziehelement (12) vorgesehen. Das Schub- und Ziehelement (12) kann in vorteilhafter Weise ein Spindelmotor oder einer Hydraulikelement sein. Das Schub- und Ziehelement (12) ist an der nicht dargestellten Abdeckklappe befestigt. Das Schub- und Ziehelement (12) bewirkt die Bewegung der nicht dargestellten Abdeckklappe in der Führungsrinne (11). Die Führungsrinne (11) besitzt nahe der Scheibe (4) einen abgeknickten Bereich (111). Wenn das - auf die Scheibe (4) bezogen - vordere Lager (10) in den abgeknickten Bereich (111) kommt, fährt das Lager (10) nach unten, währenddem das Lager (101) noch nach vorne fährt. Auf diese Weise wird die nicht dargestellte Abdeckklappe nach unten zur Scheibe (4) gekippt. Auch in diesem Ausführungsbeispiel wird in vorteilhafter Weise die nicht dargestellte Abdeckklappe (5) durch eine Dichtung (9) gegenüber der Umwelt abgedichtet.

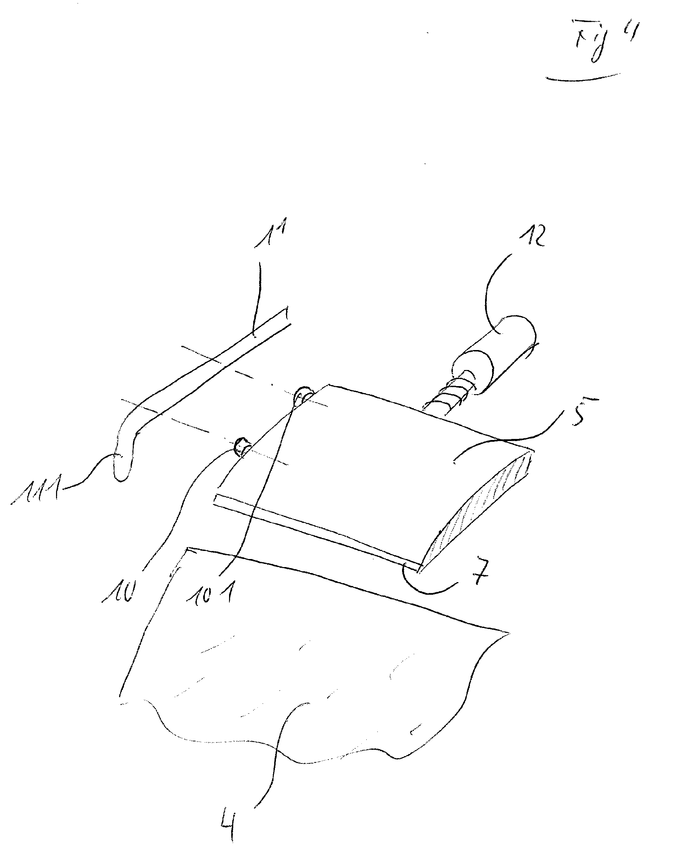

**Figur 4** zeigt eine schematische Explosionszeichnung einer Ausführungsform entsprechend Figur 3. Hierbei ist nur ein Endbereich der Abdeckklappe (5) dargestellt. An der Seite der Abdeckklappe (5) sind die (Roll- oder Gleit-)Lager (10, 101) angebracht. Die Lager (10, 101) bewegen sich in der Führungsrinne (11). Hierbei ist deutlich der abgekrümmte Bereich (111) der Führungsrinne (11) zu erkennen. In Richtung der Glasscheibe (4) ist an der Kante der Abdeckklappe (5) die Dichtlippe (7) angeordnet. Auf der hierzu gegenüberliegenden Seite der Abdeckklappe (5) ist das Schub- und Ziehelement (12) angeordnet. Die konstruktive Ausgestaltung des Schub- und Ziehelements (12) entspricht hierbei der konstruktiven Ausgestaltung, wie sie in Figur 2 beschrieben ist.

Es liegt auf der Hand, daß in erfindungsgemäßer Weise die Konstruktion so gestaltet werden kann, daß der Wischerarm (2) sich an der unteren Kante der Scheibe (4) in seiner Ruheposition befindet. In diesem Fall würde dann die gesamte beschriebene Konstruktion im unteren Bereich angeordnet werden.

Es liegt ferner auf der Hand, daß die erfindungsgemäße Lösung nicht auf Heckscheibenwischer beschränkt ist, sondern auch für Frontscheibenwischer geeignet ist.

Es liegt ferner auf der Hand, daß die erfindungsgemäße Lösung nicht auf Schwenkscheibenwischer beschränkt ist, sondern auch auf parallel geführte Scheibenwischer verwendet werden kann.

Die Erfindung ist ferner auch nicht auf Scheibenwischer für Land-, Luft- und Wasserfahrzeuge beschränkt, sie kann vielmehr auch bei Gebäudescheiben oder Scheiben aller Art angewendet werden.

### Bezugszeichenliste

Scheibenwischer (1)
Wischerarm (2)
Drehpunkt (3)
Scheibe (4)
Abdeckklappe (5)
Achse (6)
Welle (61)
Dichtlippe (7)
Karosseriebereich (8)
Dichtung (9)
Lager (10), (101)
Führungsrinne (11)
Schub- und Ziehelement (12)
abgeknickter Bereich (111)

## Patentansprüche

1. Schutzklappe für einen an einem Wischerarm befestigten Scheibenwischer, **dadurch gekennzeichnet, dass** der Wischerarm (2) und der Scheibenwischer (1) in ihrer Ruheposition durch eine Abdeckklappe (5) abgekapselt sind.

2. Schutzklappe für einen Scheibenwischer nach Anspruch 1 **dadurch gekennzeichnet, dass** die Abdeckklappe in ihrer geschlossenen Position zwischen einem Karosseriebereich (8) und einer Scheibe (4) angeordnet sind.

3. Schutzklappe für Scheibenwischer nach Anspruch 1 oder 2, **dadurch gekennzeichnet, dass** die Abdeckklappe (5) an ihrer der Scheibe (4) zugewandten Kante eine Dichtlippe (7) aufweist.

4. Schutzklappe für Scheibenwischer nach einem oder mehrerer der Ansprüche 1 bis 3, **dadurch gekennzeichnet, dass** im Karosseriebereich (8) gegenüber der Abdeckklappe (5) eine Dichtung (9) angeordnet ist.

5. Schutzklappe für Scheibenwischer nach Anspruch 4, **dadurch gekennzeichnet, dass** die Dichtung (9) in allen Positionen der Abdeckklappe (5) auf dieser aufliegt.

6. Schutzklappe für einen Scheibenwischer nach einem oder mehreren der Ansprüche 1 bis 5, **dadurch gekennzeichnet, dass** seitlich an der Abdeckklappe (5) Lager (10), (101) angeordnet sind, welche in einer Führungsrinne (11) positioniert sind, wobei die Führungsrinne (11) im wesentlichen parallel zur Oberfläche des Karosseriebereichs (8) verläuft und an ihrem der Scheibe (4) zugeordneten Ende einen in Richtung der Scheibe (4) abgeknickten Bereich (111) besitzt, und dass die Abdeckklappe (5) mit einem Schub- und Ziehelement (12) verbunden ist.

7. Schutzklappe für einen Scheibenwischer nach einem oder mehreren der Ansprüche 1 bis 5, **dadurch gekennzeichnet, dass** im Bereich der dem Karosseriebereich (8) zugeordneten Kante der Abdeckklappe (5), diese an einer Achse (6) befestigt ist.

8. Schutzklappe für einen Scheibenwischer nach Anspruch 7, **dadurch gekennzeichnet, dass** die Abdeckklappe (5) auf ihrer der Scheibe (4) zugeordneten Innenseite mit einem Schub- und Ziehelement (12) verbunden ist.

9. Schutzklappe für einen Scheibenwischer nach Anspruch 7, **dadurch gekennzeichnet, dass** die Abdeckklappe (5) kraftschlüssig auf einer Welle (61) angeordnet ist, wobei die Welle (61) sich im Bereich der dem Karosseriebereich (8) zugeordneten Kante der Abdeckklappe (5) angeordnet ist.

10. Schutzklappe für einen Scheibenwischer nach Anspruch 9, **dadurch gekennzeichnet, dass** die Abdeckklappe (5) auf ihrer der Scheibe (4) zugeordneten Innenseite mit einem Schub- und Ziehelement verbunden ist.

11. Schutzklappe für Scheibenwischer nach Anspruch 6 und 8, **dadurch gekennzeichnet, dass** das Schub- und Ziehelement (12) ein Spindelmotor ist.

12. Schutzklappe für Scheibenwischer nach Anspruch 6 und 8, **dadurch gekennzeichnet, dass** das Schub- und Ziehelement (12) ein Hydraulikelement ist.

13. Schutzklappe für Scheibenwischer nach Anspruch 6 und 8, **dadurch gekennzeichnet, dass** das Schub- und Ziehelement (12) ein Elektromotor ist.
